(19) Europäisches Patentamt / European Patent Office / Office européen des brevets

(11) **EP 3 035 113 A1**

(12) **EUROPEAN PATENT APPLICATION**
published in accordance with Art. 153(4) EPC

(43) Date of publication:
**22.06.2016 Bulletin 2016/25**

(21) Application number: **14892818.7**

(22) Date of filing: **23.05.2014**

(51) Int Cl.:
*G02F 1/01* (2006.01)  *G02F 1/025* (2006.01)
*G02B 6/13* (2006.01)

(86) International application number:
**PCT/CN2014/078298**

(87) International publication number:
**WO 2015/176311 (26.11.2015 Gazette 2015/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co. Ltd.**
**Shenzhen, Guangdong 518129 (CN)**

(72) Inventors:
• **MA, Xiao**
**Shenzhen**
**Guangdong 518129 (CN)**

• **HAO, Qinfen**
**Shenzhen**
**Guangdong 518129 (CN)**
• **DENG, Xiangyuan**
**Shenzhen**
**Guangdong 518129 (CN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **POLARIZATION CONTROL DEVICE AND POLARIZATION CONTROL METHOD**

(57)    The present invention discloses a polarization control device and a polarization control method. The polarization control device includes: a polarization beam splitting apparatus (110), a first phase shifter (120), a beam combiner (130), a waveguide (140), a waveguide (150), and a waveguide (160), where the polarization beam splitting apparatus (110) is configured to split input light into two beams of TE mode light or two beams of TM mode light; the first phase shifter (120) is configured to adjust a phase of light that is input to the first phase shifter (120); and the beam combiner (130) is configured to adjust a split ratio of the beam combiner (130), and combine the two beams of TE mode light or the two beams of TM mode light that is input from a first input port and a second input port of the beam combiner (130), into one beam of TE mode light or one beam of TM mode light. The use of the polarization control device and the polarization control method according to embodiments of the present invention can increase efficiency of polarization control.

FIG. 1

EP 3 035 113 A1

## Description

### TECHNICAL FIELD

The present invention relates to the field of information technologies, and in particular, to a polarization control device and a polarization control method.

### BACKGROUND

A silicon-based optical waveguide (Silicon-based Optical Waveguide) uses silicon (n≈3.5@1550 nm) as a waveguide core material, and uses a low refractive index material such as silica (n≈1.5@1550 nm) as a waveguide cladding material. This results in a high refractive index difference between the waveguide core (Waveguide Core) and the cladding. Because of the high refractive index difference, a size of a silicon-based optical waveguide device is exponentially reduced as compared with that of a conventional silica-based optical device. Using a waveguide bend radius as an example, a silica-based waveguide generally needs a bend radius of 1000 μm to achieve an extremely low leakage loss (Leakage Loss), while the silicon-based waveguide can meet the same performance requirement with a bend radius of only 10 μm. In addition, silicon is a basic material for producing an integrated circuit, and a processing technique of the silicon-based optical waveguide is compatible with that of a complementary metal-oxide-semiconductor (Complementary Metal Oxide Semiconductor, CMOS). This means that a silicon-based optical waveguide device can be mass-produced at low costs, thereby facilitating optoelectronic integration and highly influential market promotion. Because of the small size of the silicon-based optical waveguide device and compatibility with the CMOS technique, the silicon optical technology is generally considered as a key technology of the next-generation optical communications, optical computing, and optical interconnection.

However, it is not easy to make a breakthrough in and widely apply a technology. The high refractive index difference of the silicon-based optical waveguide results in not only a small size, but that an effective refractive index difference between transmitted transverse electric (Transverse Electric, TE) mode light and transmitted transverse magnetic (Transverse Magnetic, TM) mode light becomes highly sensitive to the size of the waveguide. In a case in which impact of stress (Stress) is not considered, if there is a slight difference (in the nm range) between a transverse size and a longitudinal size, a birefrigent effect (Birefrigent Effect) is introduced in the silicon-based waveguide. On one hand, this results in polarization mode dispersion, thereby degrading transmission quality of a high-speed signal; on the other hand, double resonance peak is generated in an optical interference device, thereby affecting normal operation of the interference device or even causing the entire communication system to break down. It is difficult to achieve an nm-level line precision by using a conventional manufacturing technique. Therefore, to put a silicon-based optical waveguide into practical use, it is vitally important to well control the polarization of the transmitted light and achieve single-polarization operation.

For a silicon-based optoelectronic device that is based on monolithic integration of an edge-emitting semiconductor laser (Edge-Emitting Semiconductor Laser), because the edge-emitting semiconductor laser emits a single-polarization laser beam, when a properly designed on-chip waveguide is used to couple the laser beam into the silicon-based optoelectronic device, polarization disorder does not occur. Therefore, the problem of polarization sensitivity does not exist. However, for those lasers with random polarization, such as a vertical cavity surface emitting laser (Vertical Cavity Surface Emitting Laser, VCSEL) and an application in which an off-chip light source needs to be coupled into a silicon-based optical waveguide (such as a stack optical interconnection computer), polarization control must be conducted to achieve single-polarization light transmission in the silicon-based waveguide.

In a conventional polarization control technology, the single-polarization light transmission is achieved by using a polarization maintaining optical fiber (Polarization Maintaining Optical Fiber), or by adding a polarization controller on a single-mode fiber path. However, the polarization maintaining optical fiber and the polarization controller require relatively high costs, and polarization of light subsequently input to the silicon-based waveguide may be unstable, which results in low efficiency of polarization control.

### SUMMARY

Embodiments of the present invention provide a polarization control device and a polarization control method, to increase efficiency of polarization control.

According to a first aspect, a polarization control device is provided, including:

a polarization beam splitting apparatus 110, a first phase shifter 120, a beam combiner 130, a waveguide 140, a waveguide 150, and a waveguide 160, where
the waveguide 140 is configured to connect a first output port of the polarization beam splitting apparatus 110 and a first input port of the beam combiner 130;

the waveguide 150 is configured to connect a second output port of the polarization beam splitting apparatus 110 and an input port of the first phase shifter 120;

the waveguide 160 is configured to connect an output port of the first phase shifter 120 and a second input port of the beam combiner 130;

the polarization beam splitting apparatus 110 is configured to split input light into two beams of transverse electric TE mode light or two beams of transverse magnetic TM mode light, where the two beams of TE mode light or the two beams of TM mode light are output through the first output port and the second output port of the polarization beam splitting apparatus 110, respectively;

the first phase shifter 120 is configured to adjust a phase of light that is input to the first phase shifter 120; and

the beam combiner 130 is configured to adjust a split ratio of the beam combiner 130 and combine the two beams of TE mode light or the two beams of TM mode light that are input from the first input port and the second input port of the beam combiner 130, into one beam of TE mode light or one beam of TM mode light.

With reference to the first aspect, in a first possible implementation manner, the polarization beam splitting apparatus 110 includes: a polarization beam splitter 111, a polarization rotator 112, and a waveguide 113, where:

the waveguide 113 is configured to connect a first output port of the polarization beam splitter 111 and an input port of the polarization rotator 112; where

a second output port of the polarization beam splitter 111 is the second output port of the polarization beam splitting apparatus 110; and

an output port of the polarization rotator 112 is the first output port of the polarization beam splitting apparatus 110; the polarization beam splitter 111 is configured to split the input light into two beams of light: one beam of TE mode light and one beam of TM mode light, where the one beam of TE mode light is output through the first output port of the polarization beam splitter 111 and the one beam of TM mode light is output through the second output port of the polarization beam splitter 111; and

the polarization rotator 112 is configured to convert, to TM mode light, the TE mode light that is input from the input port of the polarization rotator 112light; or

the polarization beam splitter 111 is configured to split the input light into two beams of light: one beam of TM mode light and one beam of TE mode light, where the one beam of TM mode light is output through the first output port of the polarization beam splitter 111 and the one beam of TE mode light is output through the second output port of the polarization beam splitter 111; and

the polarization rotator 112 is configured to convert, to TE mode light, the TM mode light that is input from the input port of the polarization rotator 112light.

With reference to the first aspect, in a second possible implementation manner, the polarization beam splitting apparatus 110 is a grating coupler 114, and the grating coupler 114 is configured to split the input light into two beams of TE mode light.

With reference to the first aspect or the first or second possible implementation manner of the first aspect, in a third possible implementation manner, the first phase shifter 120 is configured to adjust the phase of the light that is input to the first phase shifter 120, so that a phase difference between light that is input from the first input port of the beam combiner 130 and light that is input from the second input port of the beam combiner 130 is $\pi$.

With reference to the first aspect or any possible implementation manner of the first to third possible implementation manners of the first aspect, in a fourth possible implementation manner, the beam combiner 130 includes: a first multimode interference coupler 131, a second multimode interference coupler 132, a second phase shifter 133, a waveguide 134, a waveguide 135, and a waveguide 136, where:

a first input port of the first multimode interference coupler 131 is the first input port of the beam combiner 130, and a second input port of the first multimode interference coupler 131 is the second input port of the beam combiner 130;

an output port of the second multimode interference coupler 132 is an output port of the beam combiner 130;

the waveguide 134 is configured to connect a first output port of the first multimode interference coupler 131 and a first input port of the second multimode interference coupler 132;

the waveguide 135 is configured to connect a second output port of the first multimode interference coupler 131 and an input port of the second phase shifter 133;

the waveguide 136 is configured to connect an output port of the second phase shifter 133 and a second input port of the second multimode interference coupler 132;

the first multimode interference coupler 131 is configured to perform interference coupling on the two beams of TE mode light or the two beams of TM mode light that are input from the first input port and the second input port of the beam combiner 130, and evenly distribute optical power of each beam of TE mode light or optical power of each beam of TM mode light to the first output port and the second output port of the first multimode interference coupler 131, so as to obtain two beams of output;

the second phase shifter 133 is configured to adjust a phase of light that is input to the second phase shifter 133, so as to adjust the split ratio of the beam combiner 130; and

the second multimode interference coupler 132 is configured to perform interference coupling on two beams of input of the second multimode interference coupler 132, so as to obtain one beam of output.

With reference to the fourth possible implementation manner of the first aspect, in a fifth possible implementation manner, the second phase shifter 133 is configured to adjust the phase of the light that is input to the second phase shifter 133, so that the split ratio of the beam combiner 130 is equal to a light intensity ratio between the light that is input from the first input port of the beam combiner 130 and the light that is input from the second input port of the beam combiner 130.

With reference to the fourth or fifth possible implementation manner of the first aspect, in a sixth possible implementation manner, the polarization control device further includes:

an optoelectronic detector 170, configured to detect optical power of light extracted from the output port of the beam combiner 130, where

the first phase shifter 120 is configured to adjust the phase of the light that is input to the first phase shifter 120, so that the optical power detected by the optoelectronic detector 170 reaches a first maximum value; and

the second phase shifter 133 is configured to adjust the phase of the light that is input to the second phase shifter 133, so that the optical power detected by the optoelectronic detector 170 reaches a second maximum value.

According to a second aspect, a polarization control method is provided, including:

splitting input light into two beams of transverse electric TE mode light or two beams of transverse magnetic TM mode light;

inputting a first beam of TE mode light in the two beams of TE mode light or a first beam of TM mode light in the two beams of TM mode light to a first input port of a beam combiner; and inputting, through a first phase shifter, a second beam of TE mode light in the two beams of TE mode light or a second beam of TM mode light in the two beams of TM mode light to a second input port of the beam combiner; and

adjusting, by the first phase shifter, a phase of the second beam of TE mode light or a phase of the second beam of TM mode light; and adjusting, by the beam combiner, a split ratio of the beam combiner, and combining the two beams of TE mode light or the two beams of TM mode light that are input to the first input port and the second input port of the beam combiner, into one beam of TE mode light or one beam of TM mode light.

With reference to the second aspect, in a first possible implementation manner, the splitting input light into two beams of transverse electric TE mode light or two beams of transverse magnetic TM mode light includes:

splitting, by a polarization beam splitter, the input optical signal into the second beam of TM mode light and a third beam of TE mode light; and converting, by a polarization rotator, the third beam of TE mode light to the first beam of TM mode light; or

splitting, by a polarization beam splitter, the input light into the second beam of TE mode light and a third beam of TM mode light; and converting, by a polarization rotator, the third beam of TM mode light to the first beam of TE mode light.

With reference to the second aspect, in a second possible implementation manner, the splitting input light into two beams of transverse electric TE mode light or two beams of transverse magnetic TM mode light includes:

splitting, by a grating coupler, the input light into the first beam of TE mode light and the second beam of TE mode light.

With reference to the second aspect or the first or second possible implementation manner of the second aspect, in a third possible implementation manner, the adjusting, by the first phase shifter, a phase of the second beam of TE mode light or a phase of the second beam of TM mode light includes:

adjusting, by the first phase shifter, the phase of the second beam of TE mode light or the phase of the second beam of TM mode light, so that a phase difference between the two beams of TE mode light or the two beams of TM mode light that are input to the first input port and the second input port of the beam combiner is $\pi$.

With reference to the second aspect or any possible implementation manner of the first to third possible implementation manners of the second aspect, in a fourth possible implementation manner, the beam combiner includes: a first multimode interference coupler, a second phase shifter, and a second multimode interference coupler; and

the adjusting, by the beam combiner, a split ratio of the beam combiner, and combining the two beams of TE mode light or the two beams of TM mode light that are input to the first input port and the second input port of the beam combiner, into one beam of TE mode light or one beam of TM mode light includes:
performing, by the first multimode interference coupler, interference coupling on the two beams of TE mode light or the two beams of TM mode light that are input to the first input port and the second input port of the beam combiner; and evenly distributing optical power of each beam of TE mode light or optical power of each beam of TM mode light to a first output port and a second output port of the first multimode interference coupler, so as to obtain two beams of output;
adjusting, by the second phase shifter, a phase of one beam of output in the two beams of output, so as to adjust the split ratio of the beam combiner; and
performing, by the second multimode interference coupler, interference coupling on the other beam of output in the two beams of output and the one beam of output whose phase is adjusted by the second phase shifter, so as to obtain the one beam of TE mode light or the one beam of TM mode light.

With reference to the fourth possible implementation manner of the second aspect, in a fifth possible implementation manner, the adjusting, by the second phase shifter, a phase of one beam of output in the two beams of output, so as to adjust the split ratio of the beam combiner includes:

adjusting, by the second phase shifter, the phase of the one beam of output in the two beams of output, so that the split ratio of the beam combiner is equal to a light intensity ratio between the two beams of TE mode light or the two beams of TM mode light that are input to the first input port and the second input port of the beam combiner.

With reference to the fourth or fifth possible implementation manner of the second aspect, in a sixth possible implementation manner, the method further includes:

detecting, by an optoelectronic detector, optical power of a tiny amount of light extracted from an output port of the beam combiner, where
the adjusting, by the first phase shifter, the phase of the second beam of TE mode light or the phase of the second beam of TM mode light includes:

adjusting, by the first phase shifter, the phase of the second beam of TE mode light or the phase of the second beam of TM mode light, so that the optical power detected by the optoelectronic detector reaches a first maximum value; and
the adjusting, by the second phase shifter, a phase of one beam of output in the two beams of output includes:

adjusting, by the second phase shifter, the phase of the one beam of output in the two beams of output, so that the optical power detected by the optoelectronic detector reaches a second maximum value.

Based on the foregoing technical solutions, in the embodiments of the present invention, input light is split into two beams of TE mode light or TM mode light, a phase shifter is used to adjust a phase difference between the two beams of light, and a beam combiner adjusts a split ratio and combines the two beams of light into one beam of light. Therefore, stable and highly efficient single-polarization light can be obtained from input light in any polarization state at relatively low costs, thereby increasing efficiency of polarization control.

**BRIEF DESCRIPTION OF DRAWINGS**

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic structural diagram of a polarization control device according to an embodiment of the present invention;

FIG. 2 is a schematic structural diagram of a polarization control device according to another embodiment of the present invention;

FIG. 3 is a schematic structural diagram of a polarization control device according to still another embodiment of the present invention;

FIG. 4 is a schematic structural diagram of a beam combiner according to an embodiment of the present invention;

FIG. 5a is a line graph showing how an intensity changes with a phase difference according to an embodiment of the present invention;

FIG. 5b is a line graph showing how a phase changes with a phase difference according to an embodiment of the present invention;

FIG. 6 is a schematic structural diagram of a polarization control device according to still another embodiment of the present invention; and

FIG. 7 is a schematic flowchart of a polarization control method according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

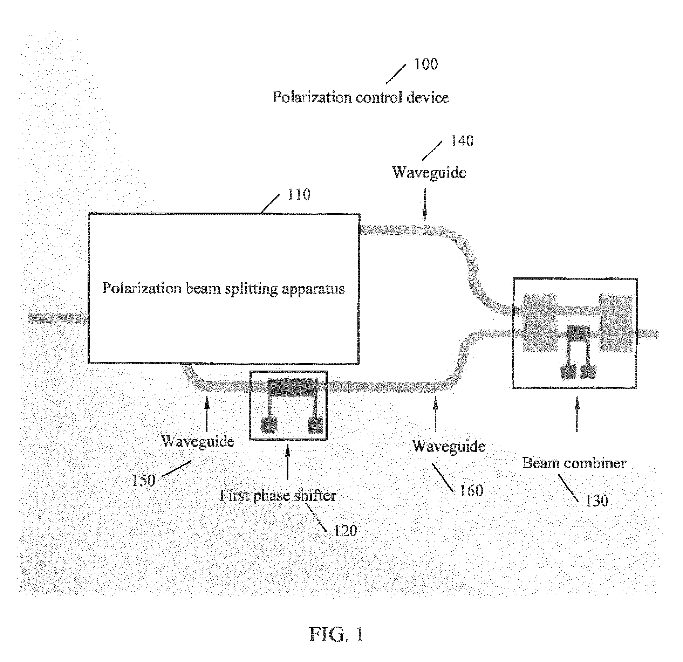

FIG. 1 shows a schematic structural diagram of a polarization control device 100 according to an embodiment of the present invention. As shown in FIG. 1, the polarization control device 100 includes: a polarization beam splitting apparatus 110, a first phase shifter 120, a beam combiner 130, a waveguide 140, a waveguide 150, and a waveguide 160.

The waveguide 140 is configured to connect a first output port of the polarization beam splitting apparatus 110 and a first input port of the beam combiner 130.

The waveguide 150 is configured to connect a second output port of the polarization beam splitting apparatus 110 and an input port of the first phase shifter 120.

The waveguide 160 is configured to connect an output port of the first phase shifter 120 and a second input port of the beam combiner 130.

The polarization beam splitting apparatus 110 is configured to split input light into two beams of transverse electric TE mode light or two beams of transverse magnetic TM mode light, where the two beams of TE mode light or the two beams of TM mode light are output through the first output port and the second output port of the polarization beam splitting apparatus 110, respectively. One beam of TE mode light or TM mode light output through the first output port of the polarization beam splitting apparatus 110 is transmitted to the first input port of the beam combiner 130 through the waveguide 140; one beam of TE mode light or TM mode light output through the second output port of the polarization beam splitting apparatus 110 is transmitted to the input port of the first phase shifter 120 through the waveguide 150.

The first phase shifter 120 is configured to adjust a phase of light that is input to the first phase shifter 120. After a phase of the one beam of TE mode light or TM mode light transmitted to the input port of the first phase shifter 120 through the waveguide 150 is adjusted by the first phase shifter 120, the one beam of TE mode light or TM mode light is transmitted to the second input port of the beam combiner 130 through the waveguide 160. Therefore, the first phase shifter 120 can adjust a phase difference between the two beams of light transmitted to the first input port and the second input port of the beam combiner 130.

The beam combiner 130 is configured to adjust a split ratio of the beam combiner 130 and combine the two beams of TE mode light or the two beams of TM mode light that are input from the first input port and the second input port of the beam combiner 130, into one beam of TE mode light or one beam of TM mode light. The beam combiner 130 can adjust the split ratio and therefore adjust light energy output, so that a relatively high light energy output can be obtained.

The polarization control device according to this embodiment of the present invention uses a polarization beam splitting apparatus to split input light into two beams of TE mode light or TM mode light, a phase shifter to adjust a phase difference between the two beams of light, and a beam combiner to adjust a split ratio and combine the two beams of light into one beam of light. Therefore, stable and highly efficient single-polarization light can be obtained from input light in any polarization state at relatively low costs, thereby increasing efficiency of polarization control.

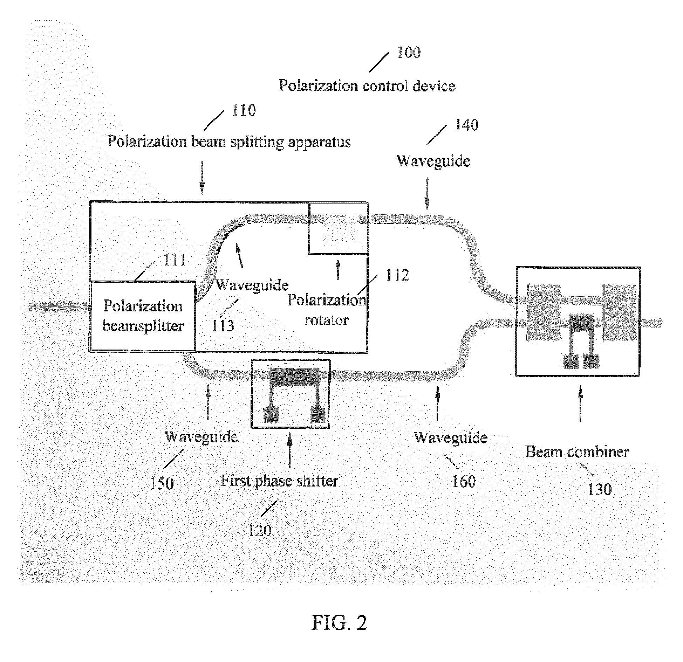

In an embodiment of the present invention, optionally, as shown in FIG. 2, the polarization beam splitting apparatus 110 includes: a polarization beam splitter 111, a polarization rotator 112, and a waveguide 113.

The waveguide 113 is configured to connect a first output port of the polarization beam splitter 111 and an input port of the polarization rotator 112.

A second output port of the polarization beam splitter 111 is the second output port of the polarization beam splitting apparatus 110.

An output port of the polarization rotator 112 is the first output port of the polarization beam splitting apparatus 110.

In this embodiment, the polarization beam splitting apparatus 110 is implemented by the polarization beam splitter 111 in combination with the polarization rotator 112.

Optionally, in an embodiment, the polarization beam splitter 111 is configured to split the input light into two beams of light: one beam of TE mode light and one beam of TM mode light, where the one beam of TE mode light is output through the first output port of the polarization beam splitter 111 and the one beam of TM mode light is output through the second output port of the polarization beam splitter 111. The TE mode light that is output through the first output port of the polarization beam splitter 111 is transmitted to the input port of the polarization rotator 112 through the waveguide 113; the TM mode light that is output through the second output port of the polarization beam splitter 111 is transmitted to the input port of the first phase shifter 120 through the waveguide 150.

The polarization rotator 112 is configured to convert, to TM mode light, the TE mode light that is input from the input port of the polarization rotator 112lightoptical signal. The TE mode light transmitted to the input port of the polarization rotator 112 through the waveguide 113 is converted to TM mode light by the polarization rotator 112, and then transmitted to the first input port of the beam combiner 130 through the waveguide 150.

After the phase of the TM mode light transmitted to the input port of the first phase shifter 120 through the waveguide 150 is adjusted by the first phase shifter 120, the TM mode light is transmitted to the second input port of the beam combiner 130 through the waveguide 160.

In this way, two beams of TM mode light can be obtained from input light in any polarization state by using the polarization beam splitter 111 and the polarization rotator 112. After their phase difference is adjusted by the first phase shifter 120, these two beams of TM mode light are finally combined into one beam of TM mode light by the beam combiner 130.

Optionally, in another embodiment, the polarization beam splitter 111 is configured to split the input light into two beams of light: one beam of TM mode light and one beam of TE mode light, where the one beam of TM mode light is output through the first output port of the polarization beam splitter 111 and the one beam of TE mode light is output through the second output port of the polarization beam splitter 111. The TM mode light that is output through the first output port of the polarization beam splitter 111 is transmitted to the input port of the polarization rotator 112 through the waveguide 113; the TE mode light that is output through the second output port of the polarization beam splitter 111 is transmitted to the input port of the first phase shifter 120 through the waveguide 150.

The polarization rotator 112 is configured to convert, to TE mode light, the TM mode light that is input from the input port of the polarization rotator 112light. The TM mode light transmitted to the input port of the polarization rotator 112 through the waveguide 113 is converted to TE mode light by the polarization rotator 112, and then transmitted to the first input port of the beam combiner 130 through the waveguide 150.

After the phase of TE mode light transmitted to the input port of the first phase shifter 120 through the waveguide 150 is adjusted by the first phase shifter 120, the TE mode light is transmitted to the second input port of the beam combiner 130 through the waveguide 160.

In this way, two beams of TE mode light can be obtained from input light in any polarization state by using the polarization beam splitter 111 and the polarization rotator 112. After their phase difference is adjusted by the first phase shifter 120, these two beams of TE mode light are finally combined into one beam of TE mode light by the beam combiner 130.

Optionally, the polarization beam splitter 112 may use a polarization beam splitter that is based on a directional coupler. In such a polarization beam splitter, a waveguide width and a waveguide interval of the directional coupler is designed, so that a coupling length of a TM mode is far less than a coupling length of a TE mode. Then, a length of the directional coupler is set to the coupling length of the TM mode, so that, if the TM mode is fully coupled to another waveguide, almost all energy of the TE mode can still be transmitted in an original waveguide, thereby achieving a function of polarization beam splitting. A polarization extinction ratio of this beam splitter can reach 20 dB. It should be understood that the polarization beam splitter 112 may also use another type of polarization beam splitter, provided that the function of polarization beam splitting can be achieved, and the present invention sets no limitation thereto.

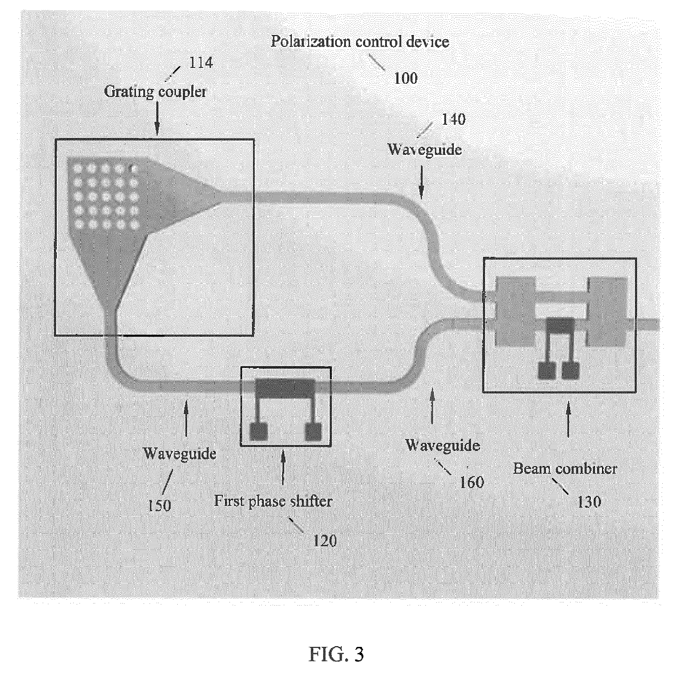

In another embodiment of the present invention, optionally, as shown in FIG. 3, the polarization beam splitting apparatus 110 is a grating coupler 114. That is, in this embodiment, the polarization beam splitting apparatus 110 is implemented by the grating coupler 114. A first output port of the grating coupler 114 is the first output port of the polarization beam splitting apparatus 110, and a second output port of the grating coupler 114 is the second output port of the polarization beam splitting apparatus 110.

The grating coupler 114 is configured to split the input light into two beams of TE mode light. The input light is vertically coupled into the grating coupler 114, and the grating coupler 114 splits the input light into two beams of TE mode light. The TE mode light that is output through the first output port of the grating coupler 114 is transmitted to the first input port of the beam combiner 130 through the waveguide 140; the TE mode light that is output through the second output port of the grating coupler 114 is transmitted to the input port of the first phase shifter 120 through the waveguide 150, and then transmitted to the second input port of the beam combiner 130 through the waveguide 160 after its phase is adjusted by the first phase shifter 120. That is, a phase difference between these two beams of TE mode light may be adjusted by the first phase shifter 120. Finally, these two beams of TE mode light are combined by the beam combiner 130 into one beam of TE mode light.

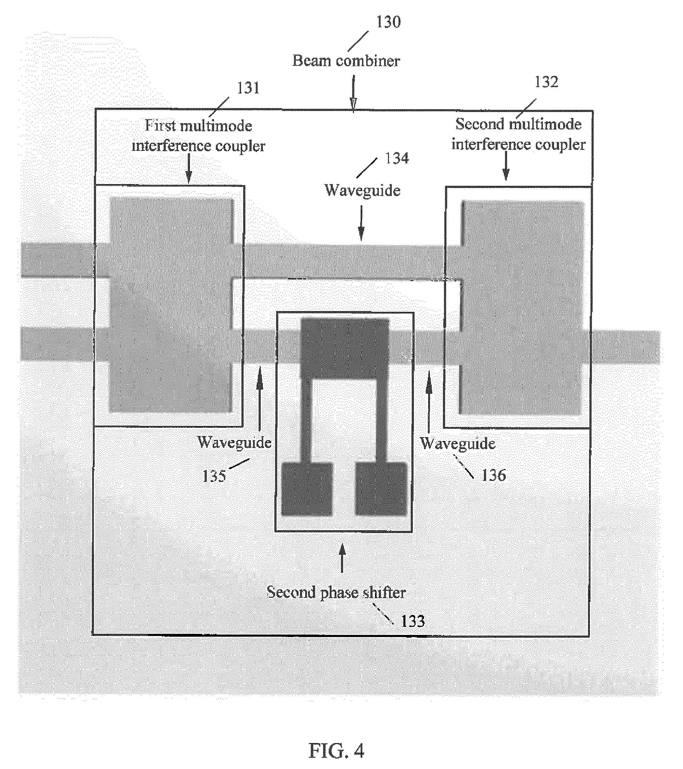

In this embodiment of the present invention, optionally, as shown in FIG. 4, the beam combiner 130 includes: a first multimode interference coupler 131, a second multimode interference coupler 132, a second phase shifter 133, a waveguide 134, a waveguide 135, and a waveguide 136.

The waveguide 134 is configured to connect a first output port of the first multimode interference coupler 131 and a first input port of the second multimode interference coupler 132.

The waveguide 135 is configured to connect a second output port of the first multimode interference coupler 131 and an input port of the second phase shifter 133.

The waveguide 136 is configured to connect an output port of the second phase shifter 133 and a second input port of the second multimode interference coupler 132.

A first input port of the first multimode interference coupler 131 is the first input port of the beam combiner 130, and a second input port of the first multimode interference coupler 131 is the second input port of the beam combiner 130.

An output port of the second multimode interference coupler 132 is an output port of the beam combiner 130.

In this embodiment, the beam combiner 130 is formed by cascading the first multimode interference coupler 131 and the second multimode interference coupler 132, with the second phase shifter 133 disposed in between to change a phase difference between two beams of light.

The first multimode interference coupler 131 is configured to perform interference coupling on the two beams of TE mode light or the two beams of TM mode light that are input from the first input port and the second input port of the beam combiner 130, and evenly distribute optical power of each beam of TE mode light or optical power of each beam of TM mode light to the first output port and the second output port of the first multimode interference coupler 131, so as to obtain two beams of output.

The second phase shifter 133 is configured to adjust a phase of light that is input to the second phase shifter 133, so as to adjust the split ratio of the beam combiner 130. That is, the second phase shifter 133 adjusts a phase of one beam of output in the two beams of output of the first multimode interference coupler 131, so as to adjust the split ratio of the beam combiner.

The second multimode interference coupler 132 is configured to perform interference coupling on two beams of input of the second multimode interference coupler 132, so as to obtain one beam of output. That is, the second multimode interference coupler 132 performs interference coupling on the other beam of output in the two beams of output of the first multimode interference coupler 131 and the one beam of output whose phase is adjusted by the second phase shifter 133, so as to obtain one beam of TE mode light or one beam of TM mode light.

Optionally, the first multimode interference coupler 131 and the second multimode interference coupler 132 can be of a same size.

A length of the first multimode interference coupler 131 and a length of the second multimode interference coupler 132 are $L = L_\pi/2$. According to a mode propagation analysis method, it can be obtained that:

$$L_\pi = 4n_s W_e^2 / 3\lambda_0 \qquad (1)$$

where $n_s$ is an effective refractive index of a slab waveguide fundamental mode,
$W_e$ is an effective mode field width of the slab waveguide fundamental mode, and $\lambda_0$ is a wavelength in vacuum of a light wave transmitted in the slab waveguide.

According to the mode propagation analysis method, it can be obtained that a bar transfer function $T_{bar}$ and a cross transfer function $T_{cross}$ of a multimode interference coupler that are determined by the foregoing parameters are separately as follows:

$$T_{bar} = \frac{1}{\sqrt{2}} \exp(-j\beta L - j\frac{\pi}{4}) \qquad (2)$$

$$T_{cross} = \frac{1}{\sqrt{2}} \exp(-j\beta L + j\frac{\pi}{4}) \qquad (3)$$

where $\beta$ is a propagation constant of the slab waveguide fundamental mode.

If a phase difference between light transmitted in the waveguide 136 and light transmitted in the waveguide 134 is $\delta$, $E_G$ is an electric field strength at the output port of the beam combiner 130 (that is, the output port of the second multimode interference coupler 132), and $E_A$ and $E_B$ are an electric field strength at the first input port of the beam combiner 130 and an electric field strength at the second input port of the beam combiner 130 (that is, the first input port and the second input port of the first multimode interference coupler 131), respectively, a function of output of the beam combiner 130 is shown in formula (4):

$$E_G = \begin{bmatrix} T_{bar} \\ T_{cross} \end{bmatrix} \begin{bmatrix} \delta \\ 0 \end{bmatrix} \begin{bmatrix} T_{bar} & T_{cross} \\ T_{cross} & T_{bar} \end{bmatrix} \begin{bmatrix} E_A \\ E_B \end{bmatrix} \qquad (4)$$

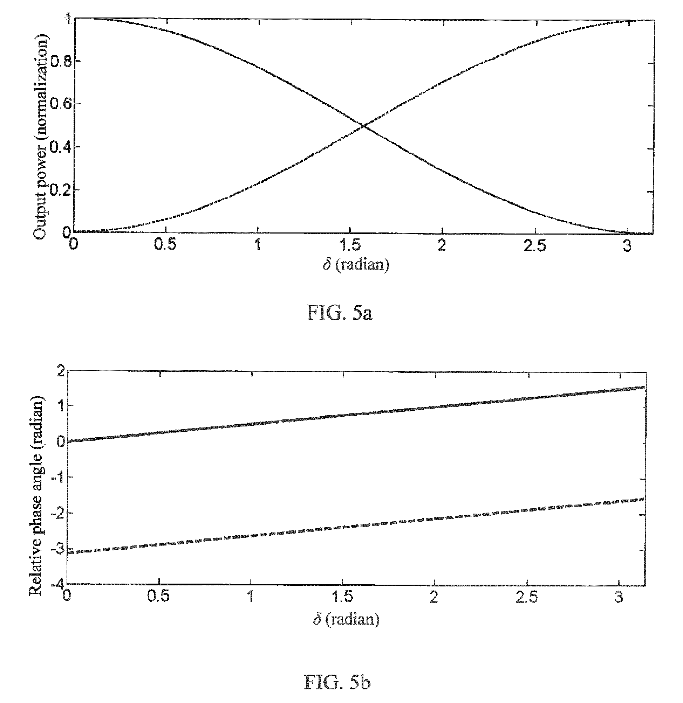

Assuming that light is incident on the output port of the second multimode interference coupler 132 and is output through the first input port and the second input port of the first multimode interference coupler 131, curves can be obtained showing how an intensity and a phase of the light change with a phase difference $\delta$, as shown in FIG. 5a and FIG. 5b, respectively. In FIG. 5a, the dashed line and the solid line show output power at the first input port and output power at the second input port, respectively, and a ratio between them is the split ratio of the beam combiner. It can be seen from FIG. 5a that, when $\delta$ changes from 0 to $\pi$, the split ratio changes from 0 to infinity. It can be seen from FIG. 5b that when $\delta$ changes from 0 to $\pi$, an output phase difference between the first input port and the second input port is fixed at $\pi$. Therefore, when the phase difference $\delta$ changes from 0 to $\pi$, a beam combiner with any split ratio can be obtained, and the output phase difference between the first input port and the second input port is fixed at $\pi$.

According to the principle of optical path reversibility, for light of any light intensity ratio that is input from the first input port and the second input port of the beam combiner 130, the first phase shifter 120 can perform adjustment, so that a phase difference between the light that is input from the first input port of the beam combiner 130 and the light that is input from the second input port of the beam combiner 130 is $\pi$; and the second phase shifter 133 in the beam combiner 130 can perform adjustment, so that the split ratio of the beam combiner 130 is equal to a light intensity ratio between the light that is input from the first input port of the beam combiner 130 and the light that is input from the second input port of the beam combiner 130. In this way, light intensity at the output port of the beam combiner 130 is fixed at 1 (that is, equal to an input light intensity), thereby achieving theoretically lossless beam combination.

Therefore, the polarization control device according to this embodiment of the present invention uses the first phase shifter 120 to adjust the phase of the light that is input to the first phase shifter 120, so that the phase difference between the light that is input from the first input port of the beam combiner 130 and the light that is input from the second input port of the beam combiner 130 is $\pi$, and uses the second phase shifter 133 to adjust the phase of the light that is input to the second phase shifter 133, so that the split ratio of the beam combiner 130 is equal to the light intensity ratio between the light that is input from the first input port of the beam combiner 130 and the light input that is from the second input port of the beam combiner 130. Therefore, stable and highly efficient single-polarization light can be obtained from input light in any polarization state, thereby increasing efficiency of polarization control.

It can be learnt from the foregoing analysis, the first phase shifter 120 and the second phase shifter 133 can perform adjustment, so that output of the beam combiner 130 can reach a maximum value. Optionally, an optoelectronic detector can be used to detect the output of the beam combiner 130 to provide a basis for adjustment.

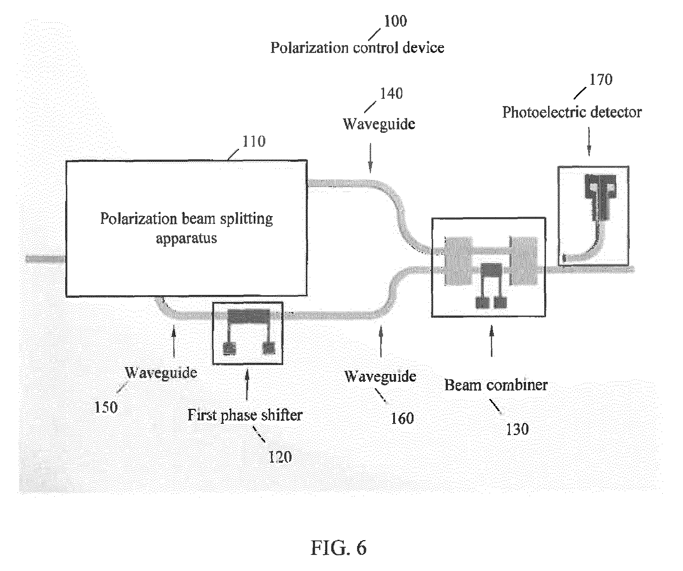

In this embodiment of the present invention, optionally, as shown in FIG. 6, the polarization control device 100 further includes:

an optoelectronic detector 170, configured to detect optical power of a tiny amount of light extracted from the output port of the beam combiner 130.

In this embodiment, the optoelectronic detector 170 extracts the tiny amount of light from the output port of the beam combiner 130 and detects optical power of the light, and a detection result serves as a basis for determining an optimal point of adjustment by the first phase shifter 120 and the second phase shifter 133. Energy of the extracted tiny amount of light should be as little as possible, so as to reduce insertion loss and ensure that as much energy as possible is transferred to a next device; meanwhile, the energy of the extracted tiny amount of light should be higher than a detection limit of the optoelectronic detection component, to ensure effective detection.

Optionally, the first phase shifter 120 adjusts the phase of the light that is input to the first phase shifter 120, so that the optical power detected by the optoelectronic detector 170 reaches a first maximum value; and

the second phase shifter 133 adjusts the phase of the light that is input to the second phase shifter 133, so that the optical power detected by the optoelectronic detector 170 reaches a second maximum value.

Specifically, for light of any light intensity ratio that is input from the first input port and the second input port of the beam combiner 130, first, the first phase shifter 120 performs adjustment, so that the optical power detected by the optoelectronic detector 170 reaches a maximum value (denoted as a first maximum value), where a phase difference between the light that is input from the first input port of the beam combiner 130 and the light that is input from the second input port of the beam combiner 130 is π; and then the second phase shifter 133 in the beam combiner 130 performs adjustment, so that the optical power detected by the optoelectronic detector 170 reaches a maximum value (denoted as a second maximum value), where a split ratio of the beam combiner 130 is equal to a light intensity ratio between the light that is input from the first input port of the beam combiner 130 and the light that is input from the second input port of the beam combiner 130.

The foregoing adjustment process may be specifically implemented by a control algorithm. For example, a process of the control algorithm may be as follows: adjusting by the first phase shifter 120, so that the optical power detected by the optoelectronic detector 170 reaches a maximum value; and adjusting by the second phase shifter 133 in the beam combiner 130, so that the optical power detected by the optoelectronic detector 170 reaches a maximum value. A complexity of the control algorithm is 2*O(N). For example, a value of N may generally be 100. Therefore, the complexity of the control algorithm becomes relatively low.

In this embodiment of the present invention, optionally, both the first phase shifter 120 and the second phase shifter 133 may be phase shifters produced based on a principle of thermal tuning. In terms of structure, they include an electrode and a metal thermocouple. In the principle of thermal tuning, a thermo-optic effect of silicon ($\partial N/\partial T=1.86\times10^{-4}$) is used, and a silicon-based waveguide is heated to change its effective refractive index, so as to change an optical distance and a phase. Generally, a frequency f of thermal tuning can reach 50 kHz. Considering that the complexity of the foregoing control algorithm is 2*O(100), it can be obtained that startup time t of the polarization control device according to this embodiment of the present invention is only t=1/f*200=4ms. That is, the startup time is relatively short.

In this embodiment of the present invention, optionally, both the first phase shifter 120 and the second phase shifter 133 may also be phase shifters produced based on a principle of electric tuning. A phase shifter based on electric tuning may be implemented by using a method such as carrier injection model based on PIN junction or a linear electro-optic effect model based on strained silicon.

The polarization control device according to this embodiment of the present invention does not need to use costly components such as a polarization maintaining optical fiber and a polarization controller, and can be implemented by using only a single-mode optical fiber. Because a beam combination technology is used, only one beam of light is output. Therefore, it is not necessary to use double optical components to perform a subsequent operation, thereby reducing component costs. In addition, the polarization control device according to this embodiment of the present invention does not require optical axis alignment between an optical fiber and a waveguide, thereby lowering a difficultly level in encapsulation and reducing encapsulation costs. Therefore, the polarization control device according to this embodiment of the present invention can be produced at relatively low costs.

The polarization control device according to this embodiment of the present invention uses a beam combination technology that is based on phase tuning and split ratio tuning. Regardless of intensity and phase information of two beams of light that pass through a polarization beam splitter or a grating coupler, maximal and stable output can be obtained after beam combination. This helps stabilize a signal-to-noise ratio of a high-speed signal. In addition, the polarization control device according to this embodiment of the present invention is disposed on a terminal chip, and polarization output is directly coupled into a silicon-based optical waveguide function device. Therefore, there is no extra polarization interference factor, and a stable polarization output can be obtained. Therefore, by using the polarization control device according to this embodiment of the present invention, stable and highly efficient single-polarization output can be obtained.

The polarization control device according to this embodiment of the present invention can perform polarization control on input light in any polarization state, thereby extending its application scope.

Two adjustment processes of the polarization control device according to this embodiment of the present invention are independent, and the complexity of the control algorithm is only 2*O(N). For thermal tuning, a startup time of 4 ms can be obtained; if electric tuning is used, the startup time can be shorter. Therefore, by using the polarization control device according to this embodiment of the present invention, relatively short startup time can be obtained.

The foregoing has described in detail a polarization control device according to the embodiment of the present invention. The following describes a polarization control method according to an embodiment of the present invention.

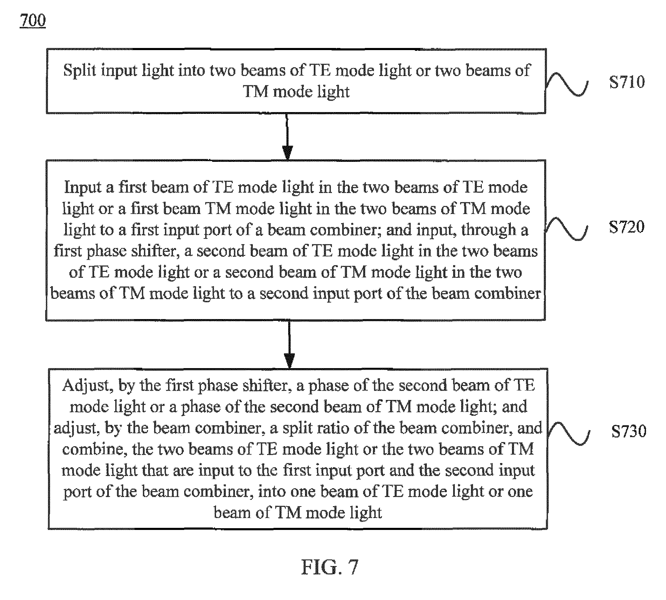

FIG. 7 shows a schematic flowchart of a polarization control method 700 according to an embodiment of the present invention. As shown in FIG. 7, the method includes:

S710: Split input light into two beams of TE mode light or two beams of TM mode light;
S720: Input a first beam of TE mode light in the two beams of TE mode light or a first beam of TM mode light in the two beams of TM mode light to a first input port of a beam combiner; and input, through a first phase shifter, a second beam of TE mode light in the two beams of TE mode light or a second beam of TM mode light in the two beams of TM mode light to a second input port of the beam combiner; and

S730: Adjust, by the first phase shifter, a phase of the second beam of TE mode light or a phase of the second beam of TM mode light; and adjust, by the beam combiner, a split ratio of the beam combiner, and combine the two beams of TE mode light or the two beams of TM mode light that are input to the first input port and the second input port of the beam combiner, into one beam of TE mode light or one beam of TM mode light.

It should be understood that each process of the polarization control method 700 according to this embodiment of the present invention may be implemented by the modules in the polarization control device 100 according to the foregoing embodiment of the present invention. For corresponding specific description, refer to the foregoing embodiment, and details are not described herein again.

In the polarization control method according to this embodiment of the present invention, input light is split into two beams of TE mode light or TM mode light, and a phase difference between the two beams of light and a split ratio of a beam combiner are adjusted, and then the two beams of light are combined into one beam of light. Therefore, stable and highly efficient single-polarization light can be obtained from input light in any polarization state at relatively low costs, thereby increasing efficiency of polarization control.

In an embodiment of the present invention, optionally, the splitting input light into two beams of TE mode light or two beams of TM mode light includes:

splitting, by a polarization beam splitter, the input light into the second beam of TM mode light and a third beam of TE mode light; and converting, by a polarization rotator, the third beam of TE mode light to the first beam of TM mode light; or

splitting, by a polarization beam splitter, the input light into the second beam of TE mode light and a third beam of TM mode light; and concerting, by a polarization rotator, the third beam of TM mode light to the first beam of TE mode light.

In another embodiment of the present invention, optionally, the splitting input light into two beams of TE mode light or two beams of TM mode light includes:

splitting, by a grating coupler, the input light into the first beam of TE mode light and the second beam of TE mode light.

In this embodiment of the present invention, optionally, the adjusting, by the first phase shifter, a phase of the second beam of TE mode light or a phase of the second beam of TM mode light includes:

adjusting, by the first phase shifter, the phase of the second beam of TE mode light or the phase of the second beam of TM mode light, so that a phase difference between the two beams of TE mode light or the two beams of TM mode light that are input to the first input port and the second input port of the beam combiner is $\pi$.

In this embodiment of the present invention, optionally, the beam combiner includes: a first multimode interference coupler, a second phase shifter, and a second multimode interference coupler.

In this case, the adjusting, by the beam combiner, a split ratio of the beam combiner, and combining the two beams of TE mode light or the two beams of TM mode light that are input to the first input port and the second input port of the beam combiner, into one beam of TE mode light or one beam of TM mode light includes:

performing, by the first multimode interference coupler, interference coupling on the two beams of TE mode light or the two beams of TM mode light that are input to the first input port and the second input port of the beam combiner; and evenly distributing optical power of each beam of TE mode light or optical power of each beam of TM mode light to a first output port and a second output port of the first multimode interference coupler, so as to obtain two beams of output;

adjusting, by the second phase shifter, a phase of one beam of output in the two beams of output, so as to adjust the split ratio of the beam combiner; and

performing, by the second multimode interference coupler, interference coupling on the other beam of output in the two beams of output and the one beam of output whose phase is adjusted by the second phase shifter, so as to obtain the one beam of TE mode light or the one beam of TM mode light.

In this embodiment of the present invention, optionally, the adjusting, by the second phase shifter, a phase of one beam of output in the two beams of output, so as to adjust the split ratio of the beam combiner includes:

adjusting, by the second phase shifter, the phase of the one beam of output in the two beams of output, so that the split ratio of the beam combiner is equal to a light intensity ratio between the two beams of TE mode light or the two beams of TM mode light that are input to the first input port and the second input port of the beam combiner.

In this embodiment of the present invention, optionally, the method 700 further includes:

detecting, by an optoelectronic detector, optical power of a tiny amount of light extracted from an output port of the beam combiner, where
the adjusting, by the first phase shifter, the phase of the second beam of TE mode light or the phase of the second beam of TM mode light includes:

adjusting, by the first phase shifter, the phase of the second beam of TE mode light or the phase of the second beam of TM mode light, so that the optical power detected by the optoelectronic detector reaches a first maximum value; and
the adjusting, by the second phase shifter, a phase of one beam of output in the two beams of output includes:

adjusting, by the second phase shifter, the phase of the one beam of output in the two beams of output, so that the optical power detected by the optoelectronic detector reaches a second maximum value.

A person of ordinary skill in the art may be aware that, with reference to the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In the several embodiments provided in the present application, it should be understood that the disclosed system, apparatus, and method may be implemented in other manners. For example, the described apparatus embodiment is merely exemplary. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A polarization control device, comprising:

a polarization beam splitting apparatus (110), a first phase shifter (120), a beam combiner (130), a waveguide (140), a waveguide (150), and a waveguide (160), wherein:

the waveguide (140) is configured to connect a first output port of the polarization beam splitting apparatus (110) and a first input port of the beam combiner (130);
the waveguide (150) is configured to connect a second output port of the polarization beam splitting apparatus (110) and an input port of the first phase shifter (120);
the waveguide (160) is configured to connect an output port of the first phase shifter (120) and a second input port of the beam combiner (130);
the polarization beam splitting apparatus (110) is configured to split input light into two beams of transverse electric TE mode light or two beams of transverse magnetic TM mode light, wherein the two beams of TE mode light or the two beams of TM mode light are output through the first output port and the second output port of the polarization beam splitting apparatus (110), respectively;
the first phase shifter (120) is configured to adjust a phase of light that is input to the first phase shifter (120); and
the beam combiner (130) is configured to adjust a split ratio of the beam combiner (130) and combine the two beams of TE mode light or the two beams of TM mode light that are input from the first input port and the second input port of the beam combiner (130), into one beam of TE mode light or one beam of TM mode light.

2. The polarization control device according to claim 1, wherein the polarization beam splitting apparatus 110 comprises: a polarization beam splitter (111), a polarization rotator (112), and a waveguide (113), wherein:

the waveguide (113) is configured to connect a first output port of the polarization beam splitter (111) and an input port of the polarization rotator (112); wherein
a second output port of the polarization beam splitter (111) is the second output port of the polarization beam splitting apparatus (110); and
an output port of the polarization rotator (112) is the first output port of the polarization beam splitting apparatus (110); the polarization beam splitter (111) is configured to split the input light into two beams of light: one beam of TE mode light and one beam of TM mode light, wherein the one beam of TE mode light is output through the first output port of the polarization beam splitter (111) and the one beam of TM mode light is output through the second output port of the polarization beam splitter (111); and
the polarization rotator (112) is configured to convert, to TM mode light, the TE mode light that is input from the input port of the polarization rotator (112)light; or
the polarization beam splitter (111) is configured to split the input light into two beams of light: one beam of TM mode light and one beam of TE mode light, wherein the one beam of TM mode light is output through the first output port of the polarization beam splitter (111) and the one beam of TE mode light is output through the second output port of the polarization beam splitter (111); and
the polarization rotator (112) is configured to convert, to TE mode light, the TM mode light that is input from the input port of the polarization rotator (112) light.

3. The polarization control device according to claim 1, wherein the polarization beam splitting apparatus (110) is a grating coupler (114), and the grating coupler (114) is configured to split the input light into two beams of TE mode light.

4. The polarization control device according to any one of claims 1 to 3, wherein the first phase shifter (120) is configured to adjust the phase of the light that is input to the first phase shifter (120), so that a phase difference between light that is input from the first input port of the beam combiner (130) and light that is input from the second input port of the beam combiner (130) is $\pi$.

5. The polarization control device according to any one of claims 1 to 4, wherein the beam combiner (130) comprises: a first multimode interference coupler (131), a second multimode interference coupler (132), a second phase shifter (133), a waveguide (134), a waveguide (135), and a waveguide (136), wherein:

a first input port of the first multimode interference coupler (131) is the first input port of the beam combiner

(130), and a second input port of the first multimode interference coupler (131) is the second input port of the beam combiner (130);

an output port of the second multimode interference coupler (132) is an output port of the beam combiner (130);

the waveguide (134) is configured to connect a first output port of the first multimode interference coupler (131) and a first input port of the second multimode interference coupler (132);

the waveguide (135) is configured to connect a second output port of the first multimode interference coupler (131) and an input port of the second phase shifter (133);

the waveguide (136) is configured to connect an output port of the second phase shifter (133) and a second input port of the second multimode interference coupler (132);

the first multimode interference coupler (131) is configured to perform interference coupling on the two beams of TE mode light or the two beams of TM mode light that are input from the first input port and the second input port of the beam combiner (130), and evenly distribute optical power of each beam of TE mode light or optical power of each beam of TM mode light to the first output port and the second output port of the first multimode interference coupler (131), so as to obtain two beams of output;

the second phase shifter (133) is configured to adjust a phase of light that is input to the second phase shifter (133), so as to adjust the split ratio of the beam combiner (130); and

the second multimode interference coupler (132) is configured to perform interference coupling on two beams of input of the second multimode interference coupler (132), so as to obtain one beam of output.

6. The polarization control device according to claim 5, wherein the second phase shifter (133) is configured to adjust the phase of the light that is input to the second phase shifter (133), so that the split ratio of the beam combiner (130) is equal to a light intensity ratio between the light that is input from the first input port of the beam combiner (130) and the light that is input from the second input port of the beam combiner (130).

7. The polarization control device according to claim 5 or 6, wherein the polarization control device further comprises:

an optoelectronic detector (170), configured to detect optical power of light extracted from the output port of the beam combiner (130), wherein:

the first phase shifter (120) is configured to adjust the phase of the light that is input to the first phase shifter (120), so that the optical power detected by the optoelectronic detector (170) reaches a first maximum value; and

the second phase shifter (133) is configured to adjust the phase of the light that is input to the second phase shifter (133), so that the optical power detected by the optoelectronic detector (170) reaches a second maximum value.

8. A polarization control method, comprising:

splitting input light into two beams of transverse electric TE mode light or two beams of transverse magnetic TM mode light;

inputting a first beam of TE mode light in the two beams of TE mode light or a first beam of TM mode light in the two beams of TM mode light to a first input port of a beam combiner; and inputting, through a first phase shifter, a second beam of TE mode light in the two beams of TE mode light or a second beam of TM mode light in the two beams of TM mode light to a second input port of the beam combiner; and

adjusting, by the first phase shifter, a phase of the second beam of TE mode light or a phase of the second beam of TM mode light; and adjusting, by the beam combiner, a split ratio of the beam combiner, and combining the two beams of TE mode light or the two beams of TM mode light that are input to the first input port and the second input port of the beam combiner, into one beam of TE mode light or one beam of TM mode light.

9. The method according to claim 8, wherein the splitting input light into two beams of transverse electric TE mode light or two beams of transverse magnetic TM mode light comprises:

splitting, by a polarization beam splitter, the input light into the second beam of TM mode light and a third beam of TE mode light; and converting, by a polarization rotator, the third beam of TE mode light to the first beam of TM mode light; or

splitting, by a polarization beam splitter, the input light into the second beam of TE mode light and a third beam of TM mode light; and converting, by a polarization rotator, the third beam of TM mode light to the first beam of TE mode light.

**10.** The method according to claim 8, wherein the splitting input light into two beams of transverse electric TE mode light or two beams of transverse magnetic TM mode light comprises:

splitting, by a grating coupler, the input light into the first beam mode light and the second beam of TE mode light.

**11.** The method according to any one of claims 8 to 10, wherein the adjusting, by the first phase shifter, a phase of the second beam of TE mode light or a phase of the second beam of TM mode light comprises:

adjusting, by the first phase shifter, the phase of the second beam of TE mode light or the phase of the second beam of TM mode light, so that a phase difference between the two beams of TE mode light or the two beams of TM mode light that are input to the first input port and the second input port of the beam combiner is $\pi$.

**12.** The method according to any one of claims 8 to 11, wherein the beam combiner comprises: a first multimode interference coupler, a second phase shifter, and a second multimode interference coupler; and
the adjusting, by the beam combiner, a split ratio of the beam combiner, and combining the two beams of TE mode light or the two beams of TM mode light that are input to the first input port and the second input port of the beam combiner, into one beam of TE mode light or one beam of TM mode light comprises:

performing, by a first multimode interference coupler in the beam combiner, interference coupling on the two beams of TE mode light or the two beams of TM mode light that are input to the first input port and the second input port of the beam combiner; and evenly distributing optical power of each beam of TE mode light or optical power of each beam of TM mode light to a first output port and a second output port of the first multimode interference coupler, so as to obtain two beams of output;
adjusting, by a second phase shifter in the beam combiner, a phase of one beam of output in the two beams of output, so as to adjust the split ratio of the beam combiner; and
performing, by a second multimode interference coupler in the beam combiner, interference coupling on the other beam of output in the two beams of output and the one beam of output whose phase is adjusted by the second phase shifter, so as to obtain the one beam of TE mode light or the one beam of TM mode light.

**13.** The method according to claim 12, the adjusting, by the second phase shifter, a phase of one beam of output in the two beams of output, so as to adjust the split ratio of the beam combiner comprises:

adjusting, by the second phase shifter, the phase of the one beam of output in the two beams of output, so that the split ratio of the beam combiner is equal to a light intensity ratio between the two beams of TE mode light or the two beams of TM mode light that are input to the first input port and the second input port of the beam combiner.

**14.** The method according to claim 12 or 13, wherein the method further comprises:

detecting, by an optoelectronic detector, optical power of a tiny amount of light extracted from an output port of the beam combiner, wherein
the adjusting, by the first phase shifter, the phase of the second beam of TE mode light or the phase of the second beam of TM mode light comprises:

adjusting, by the first phase shifter, the phase of the second beam of TE mode light or the phase of the second beam of TM mode light, so that the optical power detected by the optoelectronic detector reaches a first maximum value; and
the adjusting, by the second phase shifter, a phase of one beam of output in the two beams of output comprises:

adjusting, by the second phase shifter, the phase of the one beam of output in the two beams of output, so that the optical power detected by the optoelectronic detector reaches a second maximum value.

FIG. 1

FIG. 2

FIG. 3

130
Beam combiner

131

First multimode
interference coupler

132

Second multimode
interference coupler

134
Waveguide

Waveguide

135

Waveguide

136

Second phase shifter

133

FIG. 4

FIG. 5a

FIG. 5b

FIG. 6

700

| Split input light into two beams of TE mode light or two beams of TM mode light | S710 |

| Input a first beam of TE mode light in the two beams of TE mode light or a first beam TM mode light in the two beams of TM mode light to a first input port of a beam combiner; and input, through a first phase shifter, a second beam of TE mode light in the two beams of TE mode light or a second beam of TM mode light in the two beams of TM mode light to a second input port of the beam combiner | S720 |

| Adjust, by the first phase shifter, a phase of the second beam of TE mode light or a phase of the second beam of TM mode light; and adjust, by the beam combiner, a split ratio of the beam combiner, and combine, the two beams of TE mode light or the two beams of TM mode light that are input to the first input port and the second input port of the beam combiner, into one beam of TE mode light or one beam of TM mode light | S730 |

FIG. 7

**EP 3 035 113 A1**

<table>
<tr><td colspan="2"><b>INTERNATIONAL SEARCH REPORT</b></td><td>International application No.<br>PCT/CN2014/078298</td></tr>
</table>

**A. CLASSIFICATION OF SUBJECT MATTER**

G02F 1/01 (2006.01) i , G02F 1/025 (2006.01) i, G02B 6/13 (2006.01) n

According to International Patent Classification (IPC) or to both national classification and IPC

**B. FIELDS SEARCHED**

Minimum documentation searched (classification system followed by classification symbols)

G02F 1/-; G02B 6/-

Documentation searched other than minimum documentation to the extent that such documents are included in the fields searched

Electronic data base consulted during the international search (name of data base and, where practicable, search terms used)

WPI, EPODC, CNABS, CNTXT, USTXT, EPTXT, WOTXT, GOOGLE SCHOLAR, CNKI: polaris+ or polariz+, split+, phase w shift+,

combin+, TE OR TM, MMI or coupl+, power 3w ratio, control, convert, ma xiao, hao qinfen, deng xiangyuan, huawei

**C. DOCUMENTS CONSIDERED TO BE RELEVANT**

| Category* | Citation of document, with indication, where appropriate, of the relevant passages | Relevant to claim No. |
|---|---|---|
| Y | US 2004008916 A1 (RIDGWAY, RICHARD WILLIAM et al.) 15 January 2004 (15.01.2004) description, paragraphs [0011], [0012], [0041]-[0043], [0069], [0077]-[0079] and figures 3A, 4A-4E, 9, 12 | 1-4, 8-11 |
| Y | CN 103424893 A (UNIV XIDIAN) 04 December 2013 (04.12.2013) description, paragraphs [0034]-[0038] and figure 1 | 1-4, 8-11 |
| Y | CN 102540505 A (INSTITUTE OF SEMICONDUCTORS, CHINESE ACADEMY OF SCIENCES) 04 July 2012 (04.07.2012) description, paragraph [0033] and figure 2 | 3, 10 |
| A | JP 2011-64657 A (NIPPON TELEGRAPH & TELEPHONE CORP.) 31 March 2011 (31.03.2011) the whole document | 1-14 |
| A | CN 1828349 A (UNIV ZHEJIANG) 06 September 2006 (06.09.2006) the whole document | 1-14 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13 August 2014 | 30 September 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHANG, Jin<br><br>Telephone No. (86-10) 82245880 |

Form PCT/ISA /210 (second sheet) (July 2009)

23

**INTERNATIONAL SEARCH REPORT**

| International application No. |
| --- |
| PCT/CN2014/078298 |

C (Continuation).      DOCUMENTS CONSIDERED TO BE RELEVANT

| Category* | Citation of document, with indication, where appropriate, of the relevant passages | Relevant to claim No. |
| --- | --- | --- |
| A | US 2003169964 A1 (WANG, Tairan et al.) 11 September 2003 (11.09.2003) the whole document | 1-14 |

Form PCT/ISA /210 (continuation of second sheet) (July 2009)

**EP 3 035 113 A1**

**INTERNATIONAL SEARCH REPORT**
Information on patent family members

International application No.

PCT/CN2014/078298

| Patent Documents referred in the Report | Publication Date | Patent Family | Publication Date |
|---|---|---|---|
| US 2004008916 A1 | 15 January 2004 | CA 2492199 A1 | 22 January 2004 |
| | | WO 2004008202 A3 | 11 March 2004 |
| | | EP 1529238 A2 | 11 May 2005 |
| | | AU 2003248730 A1 | 02 February 2004 |
| | | JP 2005533277 A | 04 November 2005 |
| | | US 6853758 B2 | 08 February 2005 |
| | | WO 2004008202 A2 | 22 January 2004 |
| | | AU 2003248730 A8 | 27 October 2005 |
| CN 103424893 A | 04 December 2013 | None | |
| CN 102540505 A | 04 July 2012 | None | |
| JP 2011-64657 A | 31 March 2011 | JP 5319468 B2 | 16 October 2013 |
| CN 1828349 A | 06 September 2006 | CN 100371775 C | 27 February 2008 |
| US 2003169964 A1 | 11 September 2003 | US 7027686 B1 | 11 April 2006 |
| | | WO 03076987 A2 | 18 September 2003 |
| | | WO 03076987 A3 | 19 August 2004 |

Form PCT/ISA /210 (patent family annex) (July 2009)